# EUROPEAN PATENT SPECIFICATION

(11) **EP 1 459 011 B1**
(45) Date of publication and mention of the grant of the patent: **20.06.2007**
(21) Application number: 02789025.0
(22) Date of filing: 19.12.2002
(51) Int. Cl.: F22B 37/12, F22G 3/00, F28G 7/00, G01N 17/00

(54) **STEAM SUPER HEATER COMPRISING UNROUND PIPES**
DAMPFÜBERHITZER MIT UNRUNDEN ROHREN
SURCHAUFFEUR A VAPEUR COMPORTANT DES TUYAUX NON ARRONDIS

(30) Priority: 19.12.2001 NL 1019612
(43) Date of publication of application: 22.09.2004
(73) Proprietor: Gemeente Amsterdam, Gemeentelijke Dienst Afvalverwerking, 1045 BA Amsterdam (NL)
(72) Inventor: VAN BERLO, Marcellus, Antonius, Jozef, NL-1058 EN Amsterdam (NL)
(74) Representative: Kupecz, Arpad
(86) International application number: PCT/NL2002/000848
(87) International publication number: WO 2003/052318

(56) References cited:
- DE-A- 1 526 921
- DE-C- 176 739
- FR-A- 2 754 898
- NL-C- 1 015 438
- US-A- 3 835 817
- US-A- 4 018 267
- US-A- 4 244 749
- US-A- 4 836 146
- PATENT ABSTRACTS OF JAPAN vol. 009, no. 307 (M-435), 4 December 1985 (1985-12-04) & JP 60 142200 A (TSUKISHIMA KIKAI KK;OTHERS: 01), 27 July 1985 (1985-07-27)

## Description

The present invention relates to a heat exchanger according to the preamble of claim 1. A heat exchanger of this kind is very useful especially, but not exclusively, for the recovery of heat energy from flue gases from a waste incineration plant. Although hereafter reference will be made mainly to the use of the heat exchanger in waste incineration plants, it is also possible to use the same with other hot gases, especially if they are polluted with dust such as also occurs, for example, when incinerating biomass.

In waste incineration plants it is usual practice to use the hot flue gases released during incineration of waste for the generation of steam. To this end the Waste Fired Power Plant (WFPP) possesses a heat exchanger comprising pipe banks through which steam is conducted that has to be heated further with the aid of fuel gases in order to obtain superheated steam. For this purpose steam that is formed earlier is conducted via a steam drum as known in the art, through a heat exchanger for superheating. Such a heat exchanger is generally known as a steam superheater. It generally consists of a plurality of sections, each section consisting of a plurality of frames, and each frame consisting of two headers between which a plurality of parallel connected pipes are provided. At the inside, steam or water streams through said pipes and at the outside flue gases stream over the pipes.

A general drawback of waste is that it contains many pollutants so that during incineration flue gases are released accompanied by much fly ash (dust carried along with flue gases) and corrosive chemical components (in particular acids such as HCl SO₂ and a large number of salts). This flue gas causes a rapid growth of fly ash deposit on the pipes of the heat exchanger. For the removal of this deposit several techniques are known in the art. As examples soot blowing, shot peening and rapping the pipes may be mentioned in this context. The chemical components cause serious corrosion, with high-temperature HCl corrosion being the main cause for early pipe wear. This is exacerbated in particular because the growing layer of fly ash deposit contains many salts (e.g. many metal-chlorides) that form eutectics that speed up the corrosion mechanism.

In the present invention the heat exchanger is located in the convection part of the boiler, with the heat being transferred directly to the pipes due to the square approach of the flue gases. The dust in the flue gases therefore plays an important part in the formation of deposit, corrosion and erosion. The dust particles strike the surface of the pipes at the velocity of the flue gas carrying them along. The particles, which due to the high temperature have become slightly sticky, are able to adhere and accumulate to form large packs of deposit. When these packs are removed through cleaning (for example by rapping) and the pipe is stripped once more, the dust particles may also damage the metal surface directly before growing into a deposit. Especially pipes made from nickel-chromium alloys, whose corrosion-protective action consists of an extremely thin oxide-film, this protective layer may be damaged by the cleaning method or by erosion of the clean surface. This causes accelerated corrosion until the oxide-film is restored. At this point the effect should be mentioned that the pipes often do not wear homogeneously, but that they wear the quickest at an angle of 45° to the left and right of the approaching flow of flue gases.

The NL-1 015 438: "Amsterdam Gem. Dienst: Hoogrendements-AVI" (Amsterdam Municipal Service: High Efficiency - WFPP) mentions as most important measure the maintenance of low flue gas velocities as method for limiting the impact of the dust particles, and a low temperature to ensure that the material is able to protect itself by forming a new oxide-film. The document also mentions the use of water cooling for the highly loaded first pipe of a section, to protect said pipe.

An added advantage of the low flue gas velocities is that the smaller particles will tend to flow around the pipe. This means that in particular the slightly larger particles collide. Due to their size, these particles fuse less readily with the other particles, with the result that the growing mass will stay more porous and brittle. This is a great advantage because the growing mass will be able to break off of the pipe more easily. In practise a pipe having a diameter of, for example, 80 mm may exhibit deposits that grow to protrude in the direction of the flue gas, regularly reaching quite easily up to 300 mm in length. The fore-mentioned cleaning methods endeavour to remove this deposit in a boiler in operation, so as to increase the operational period of the boiler between two stops, on which occasion it is cleaned more thoroughly. Since these cleanings basically involve mechanical forces exerted on the pack of deposit in order to break the same off, brittleness is a great advantage. Especially with rapping, the pipes of a frame are caused to vibrate by striking one of the headers with the aid of a hammer mechanism. The cleaning action is in particular focused on breaking off large pieces caused by the force of inertia experienced by the mass of the deposited pack when the pipes are vibrating.

It is the object of the invention to provide an improved method and apparatus so as to reduce the fore-mentioned problems of deposit and wear. It is a particular object of the invention to provide an improved method and apparatus for use in a waste incineration plant.

In the present invention an embodiment is proposed that greatly improves both the wear of the pipes and the efficiency when cleaning the pipes. The invention provides a heat exchanger as mentioned in the preamble, which is characterised in that the superheater pipes are preceded by shield pipes or evaporator pipes that are unround. By this measure at least one of the above identified objects is fulfilled.

As already mentioned, the pipes often do not wear homogeneously, but wear quickest at a 45° angle to the left and right of the approaching flue gases. The choice of the correct diameter ratio in relation to the distance between the superheated pipes must be based on accurate analysis, in which the velocities and the mutual distance play an important role. The diameter is then chosen such that "Von Karman vortices" (see figure) will not lead to a local increase of the flow velocities and/or the amount of dust at the surface of the superheater pipes located in the wake of the pipes in front. This is in contrast with the typical design methods, where the aim is to use local turbulences to increase the heat transfer.

A simple shape may be obtained by slightly flattening round pipes in order to obtain unroundness. Other optimised shapes may include an oval shape, a drop shape or otherwise fluid-dynamically optimised shapes.

The German patent publication DE-444588, by Heinrich Lanz Akt. Ges. "Dampfüberhitzer" (steam superheater) also describes an unround pipe. However, in this embodiment the cross section of the pipe is varied over its length with the object of keeping the flow velocity in the pipe constant, while due to energy absorption the temperature and the volume of the steam increases. This is especially relevant when long pipes are involved that run zigzag through the boiler. The unroundness is then a consequence of the proposed method of simply varying the cross section of the pipe by rolling it flatter and flatter. In the present application the explicit objective of optimising the flow at the flue gas side is the unroundness. This is applicable also (but not exclusively) to relatively short straight pipes mounted between two headers.

Reference is also made to German patent DE 176739 (in the name of W. Fitzner, in 1906) who also describes a heat exchanger with unround pipes. However, this heat exchanger is used to supply heat by means of steam, which therefore or cools down. So as to provide for a reduction in the cross section, the unroundness of the pipes is increased, so as to keep the throughput of steam more or less constant.

According to a further preferred embodiment the invention relates to a heat exchanger, wherein the heat exchanger comprises several sections, each consisting of superheater pipes that are unround having their largest diameter in the direction of the flue gas stream.

Due to the unroundness, the rigidity of the pipes in the two main directions is clearly different, with the result that the natural frequency of the vibrations the pipes are likely to have in the different directions, is also different. Of particular relevance is that the natural frequencies in the direction in which a frame is struck by the rapping device differs from the natural frequencies occurring at right angles thereto. This prevents the applied knocking energy being distributed over various directions, which would render it less effective.

The natural frequencies of the unround superheater pipes in different directions, perpendicular to the longitudinal direction of the pipes, can be chosen such that by activating the pipe headers the pipes can be made to resonate at different frequencies.

In order to determine the fouling, it is possible to determine the characteristics of the natural vibrations of the pipes prior to or during vibrating the pipes for cleaning. To this end the pipe banks may be struck with an impulse and the resulting vibration image recorded by means of instruments measuring said vibrations. These instruments (73) preferably record the movement and/or the forces in the three main directions. Analysis of these signals, for example, by Fourier analysis, allows the occurring natural frequencies to be determined. Due to the fouling present, the mass of the vibrating pipes is influenced and consequently also the natural frequencies. By comparing these in various conditions of fouling, it is possible to accurately calculate the fouling that is present and how the same is distributed over the pipes. The results may be monitored during the cleaning operations and afterwards.

The data available on the basis of the analysis concerning the fouling may be used to determine that a cleaning needs to be continued for a shorter or longer period of time. Based on these data it is also possible to increase or reduce the impulse with which the header of the frame is struck for the purpose of cleaning, in order to obtain optimal cleaning without subjecting the header and pipes to a greater mechanical stress than necessary or useful.

In addition to the possibility to use an impulse from a knocking device it is also possible to make the header vibrate with specific frequencies. By varying the specific frequency over a large area, the pattern of natural frequencies can be determined with the aid of the measuring recorders, and the extent of fouling can be derived from that.

This information can be used also for the purpose of cleaning with specific frequencies that can be varied on the basis of the analysis, so as to make the various pipes vibrate in succession.

As alternative for different stiffnesses in the pipe banks resulting from unround pipes it is also possible to influence the natural frequencies of the pipe by means of stiffenings and reinforcements designed specifically for that purpose.

The heat exchanger pipes can be cleaned by the activation of pipes with a previously determined frequency in order to make them resonate, causing fouling present on the pipes to come loose.

It is possible to use such a method in which the previously determined frequency is a natural frequency of the pipes.

A further possible method is one in which the pipes are unround and the natural frequency depends on the direction of activation, the direction of activation chosen being perpendicular to the longitudinal direction of the pipes.

According to a further preferred embodiment, the invention relates to a heat exchanger, in which at least two sections are preceded by shield pipes or evaporator pipes.

According to a further preferred embodiment, the invention relates to a heat exchanger, in which the heat exchanger comprises at least two rows of extra evaporator pipes, which rows are placed parallel to one another and perpendicular to the direction of movement of flue gas, and wherein the pipes of the individual rows are at least for the main part placed in the path of the flue gas stream.

According to a further preferred embodiment, the invention relates to a heat exchanger wherein the rows of extra evaporator pipes are followed by an open space for levelling out the flue gas stream, which open space is larger than the mutual distance of the rows of pipes of the heat exchanger.

The invention will now be further elucidated with reference to the drawings.
Fig. 1 shows a schematic view of a waste incineration plant, wherein flue gases are conducted from a grate section through a first, second and third draught, after which the flue gases are conducted through a heat exchanger to the exit.
Fig. 2 shows a schematic top view of a plant according to Fig. 1.
Figs. 3-5 show further variants in cross sectional top view of pipes of a heat exchanger according to the present invention.

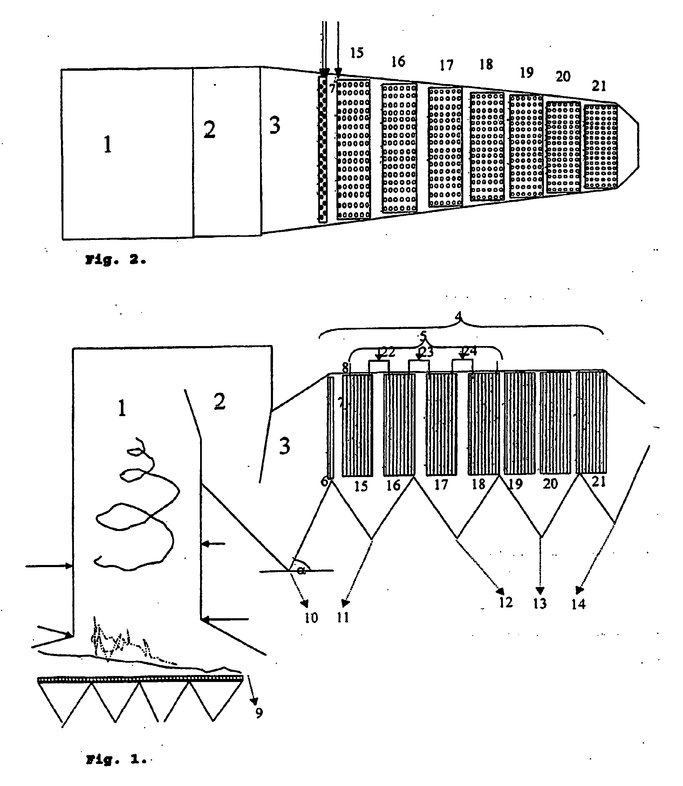

Fig. 1 shows a schematic view of a waste incineration plant. The flue gases are fed to a first draught 1, where they rise vertically and are subsequently diverted to a second draught 2, where the flue gases are conducted downward and diverted to a further draught 3. A first draught is constructed, among other things, from a known membrane wall (not shown).

The flue gases leaving the third draught are subsequently conducted to a heat exchanger 4 in the form of a steam superheater 5 (in Dutch generally indicated as OVO). In the form represented, this OVO comprises four different series of heat exchanger pipes 15-18. At the beginning of the heat exchanger 4 a so-called evaporator wall 6 is provided. This evaporator wall 6 serves to even out the flow of flue gases approaching the heat exchanger 5. To this end the evaporator wall 6 preferably comprises two rows of evaporator pipes, as shown in Fig. 2. After these two rows of evaporator pipes there is preferably a small open space 7, after which one following row of evaporator pipes 8 is provided, after which the first rows of evaporator pipes are placed behind one another, aligned with the pipes of the preceding row of evaporator pipes, as can be seen in Fig. 2. The small open space 7 is preferably long enough to allow the flue gas velocity to be evened out over the entire flue-flow surface in this open gap 7 so that its flow velocity is practically everywhere the same.

In the art the evaporator wall 6 is a place subject to fly ash deposit, and rapid cooling of the flue gases affects the core of the fly ash particles contained in the flue gases only after some delay, so that they sometimes retain an interior temperature of T > 800°C with the result that they are still in a so-called "sticky phase". When these particles collide with the successive pipes of the evaporator wall, they will therefore adhere to its surface. These particles will to a considerable degree also adhere to the heat exchanger pipes. In addition to lowering the temperature, moderating the flue gas velocities can also reduce this effect. This also results in reduction of the deposit of fouling on the heat exchanger pipes. This deposit of ash may be removed from the pipes by a method known in the art.

In practice it is preferred for the evaporator wall 6 to even out the flow in order to avoid local high velocities. The flue gas velocity is preferably 3 to 4 m/s or lower, which results in the surface temperature of the pipes staying below the flue gas temperature. The evaporator section 6 will preferably be provided over the entire width of the gas throughput at the heat exchanger 4. However, it is possible to reduce the total number of pipes per frame in the evaporator section 6, with the mutual distance between the pipes being 20-50 cm. If several rows of evaporator walls 6 are used, it is preferred for the pipes in the individual rows to be placed in the heat exchanger so as to be staggered in relation to one another. It is preferred for all the pipes to be equidistanced from one another. In this way there will be an even flow over the height and width of the flue gases before they enter the OVO 15. As there is a free approach to the first row of pipes of the first OVO, they are preferably embodied as evaporator pipes 8. The remaining pipes of the first OVO 15 are placed behind one another, behind the evaporator pipes 8.

The protection of the OVO-pipes by the evaporator pipes is especially enhanced if the evaporator pipes are embodied with a diameter that is slightly larger than that of the (viewed in the direction of flow of the flue gases) succeeding OVO-pipes.

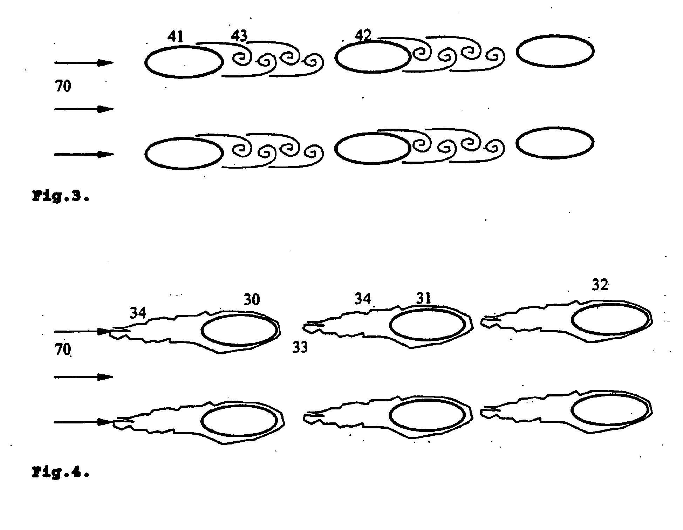

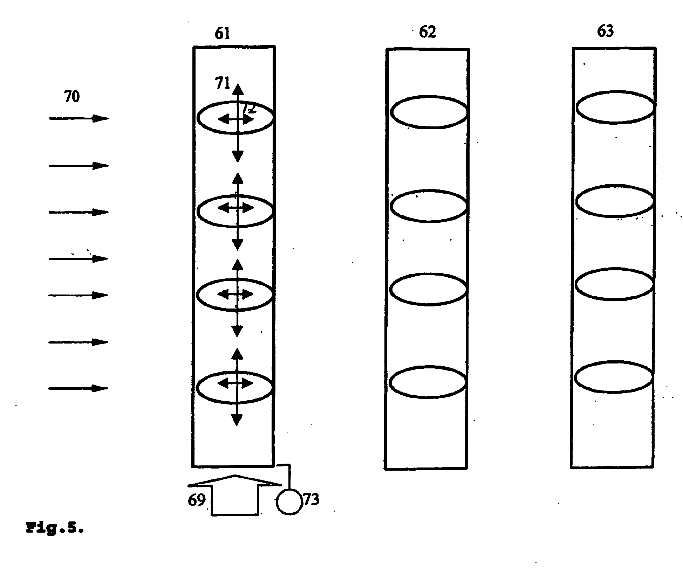

In a further preferred variant, as shown in the Figs. 3, 4 and 5, the OVO-pipes 41, 30 are embodied slightly oval, with the smallest diameter being oriented at right angles to the direction of flow S of the flue gases. This reduces wear of the pipes 41 resulting from erosion caused by fly ash in the flue gases. The prior art methods, in which the deposit 34 of fly ash on the pipes 30 of the OVO as shown in Fig. 4, is removed by vibrating the OVO-pipes (for example, by striking the headers 61, 62, 63 (vide Fig. 5) in which the ends of the pipes are fastened with a mechanical or pneumatic hammer 69) may be improved considerably by giving the OVO-pipes specific natural frequencies that are different in different directions 71, 72 due to the difference in rigidity caused by the unroundness of the pipes 30. By causing the header 61 to vibrate with these specific frequencies, the deposited fly ash 34 can be removed in a controlled manner. By properly adjusting the natural frequencies of the pipes to one another (all the same), a limited energy input will provide a maximum result. If this is difficult because the adhered mass of fly ash deposit is too different, it is also possible to give all the OVO-pipes a different frequency (which moreover is different for different directions of vibration 71, 72) so that it does indeed become possible to bring the individual pipes 30 into resonance. A system is therefore preferred, in which the unround pipes have specifically chosen natural frequencies allowing the pipes to be brought into resonance. With further preference a measuring instrument (73) is provided to determine the oscillation pattern.

In the second section 16 of the heat exchanger or the second OVO 16, the flue gas flow is already distributed evenly, a considerable amount of dust is already separated and moreover, the flue gas temperature has been lowered. After this first OVO the flue gas velocity may be increased by either narrowing the boiler, which may occur in steps or gradually, or by increasing the number of pipes per unit of surface. It is also possible to combine the two embodiments. Depending on the number of OVOs 15-18 placed in succession in the heat exchanger 4, the same is designed such that the flue gas velocity will increase during the further progress through the heat exchangers. Special preference goes to in particular the combination of the present invention with a method as described in the European patent application EP-1,164,330, titled "High efficiency waste incinerator", possibly in combination with a reduction of flue gas velocity in the flue gas throughput to less than 4 m/s, and preferably 2 to 3 m/s, and a flue gas velocity through the heat exchanger at the inlet of less than or equal to 4 m/s, at a counterflow operation of the heat exchanger, wherein the flue gases at the inlet to the heat exchanger have a temperature below 700°C, preferably below 630°C.

The term "unround" as used in the present specification refers equally and without limitation also to any substantially round pipe, which is provided at least over part of its length with reinforcements causing the pipe to behave like an unround pipe.

The invention as described above and shown in the figures represents a preferred embodiment of the invention. The invention is limited by the appended claims only.

## Claims

1. A heat exchanger (4), wherein flue gases conducted along superheater (5) pipes (15, 16, 17, 18) supply heat for the production of heated steam in said superheater pipes (15, 16, 17, 18), said superheater pipes (15) having a cross section with a first diameter and a second diameter and wherein a plurality of pipes (15, 16, 17, 18) are connected to headers, whereby the superheater pipes (15) are unround, wherein said second diameter is larger than said first diameter, **characterised in that** said superheater pipes are preceded by shield pipes or evaporator pipes (8) that are unround.

2. A heat exchanger (5) according to claim 1, **characterised in that** unround pipes (15) have a largest diameter in the direction (S) of the flue gas stream.

3. A heat exchanger (5) according to claim 1, **characterised in that** the natural frequencies of unround superheater pipes (15) in different directions, perpendicular to the longitudinal direction of the pipes, is chosen such that by activating the pipe headers the pipes (15) can be made to resonate at different frequencies.

4. A heat exchanger (5) according to one of the preceding claims, **characterised in that** one or several shield pipe or evaporator pipe rows (8) precede the superheater pipes (15).

## Patentansprüche

1. Ein Wärmetauscher (4), bei dem Abgase, die entlang Rohren (15, 16,17.18) eines Überhitzers (5) geleitet werden, Wärme für die Produktion von heißem Dampf in den Überhitzerrohren (15, 16, 17. 18) liefern, wobei die Überhitzerrohre (15) einen Querschnitt mit einem ersten Durchmesser und einem zweiten Durchmesser besitzen und wobei eine Mehrzahl von Rohren (15, 16, 17, 18) an Kopfstücke angeschlossen sind, wobei die Überhitzerrohre (15) unrund sind, wobei der zweite Durchmesser größer als der erste Durchmesser ist, **dadurch gekennzeichnet, daß** den Überhitzerrohren Abschirmrohre oder Verdampferrohre (8) vorangestellt sind, die unrund sind.

2. Ein Wärmetauscher (5) gemäß Anspruch 1, **dadurch gekennzeichnet, dass** unrunde Rohre (15) einen größten Durchmesser in der Richtung (S) der Abgasströmung besitzen.

3. Ein Wärmetauscher (5) gemäß Anspruch.1, **dadurch gekennzeichnet, dass** die Eigenfrequenzen unrunder Überhitzerrohre (15) in unterschiedlichen Richtungen, senkrecht zur Längsrichtung der Rohre, so gewählt sind, dass durch Aktivieren der Rohrkopfstücke die Rohre (15) zur Resonanz bei unterschiedlichen Frequenzen angeregt werden können.

4. Ein Wärmetauscher (5) gemäß einem der voranstehenden Ansprüche, **dadurch gekennzeichnet, dass** ein oder mehrere Abschirmrohr oder Verdampferrohrreihen (8) den Überhitzerrohren (15) vorangestellt sind.

## Revendications

1. Echangeur de chaleur (4), dans lequel des gaz de carneau conduits le long de tubes (15, 16, 17, 18) d'un surchauffeur (5) fournissent de la chaleur pour la production de vapeur d'eau chauffée dans lesdits tubes (15, 16, 17, 18) de surchauffeur, lesdits tubes (15) de surchauffeur ayant une section transversale avec un premier diamètre et un second diamètre, et dans lequel plusieurs tubes (15, 16, 17, 18) sont raccordés à des collecteurs, les tubes (15) de surchauffeur n'étant pas ronds, ledit second diamètre étant plus grand que ledit premier diamètre, **caractérisé en ce que** lesdits tubes de surchauffeur sont précédés de tubes de protection ou de tubes (8) d'évaporateur qui ne sont pas ronds.

2. Echangeur de chaleur (5) selon la revendication 1, **caractérisé en ce que** des tubes (15) qui ne sont pas ronds ont un plus grand diamètre dans la direction (S) du courant de gaz de carneau.

3. Echangeur de chaleur (5) selon la revendication 1, **caractérisé en ce que** les fréquences propres de tubes (15) de surchauffeur qui ne sont pas ronds dans des directions différentes, perpendiculaires à la direction longitudinale des tubes, sont choisies de façon qu'en activant les collecteurs des tubes, les tubes (15) puissent être amenés à résonner à des fréquences différentes.

4. Echangeur de chaleur (5) selon l'une des revendications précédentes, **caractérisé en ce qu'**une ou plusieurs rangées (8) de tubes de protection ou de tubes d'évaporateur précèdent les tubes (15) de surchauffeur.
